# EUROPEAN PATENT SPECIFICATION

(11) **EP 4 102 068 B1**
(45) Date of publication and mention of the grant of the patent: **13.03.2024**
(21) Application number: 21178627.2
(22) Date of filing: 09.06.2021
(51) Int. Cl.: F03D 80/70

(54) **WIND TURBINE GENERATOR GREASE EXTRACTION DEVICE AND METHOD OF GREASE EXTRACTION**
VORRICHTUNG ZUR SCHMIERFETTEXTRAKTION BEI EINEM WINDTURBINENGENERATOR UND VERFAHREN ZUR SCHMIERFETTEXTRAKTION
DISPOSITIF D'EXTRACTION DE GRAISSE DE GÉNÉRATEUR D'ÉOLIENNE ET PROCÉDÉ D'EXTRACTION DE GRAISSE

(43) Date of publication of application: 14.12.2022
(73) Proprietor: Ørsted Wind Power A/S, 7000 Fredericia (DK)
(72) Inventor: TOFT, Anders Saaby, 2820 Gentofte (DK)
(74) Representative: Gaunt, Thomas Derrick

(56) References cited:
- CN-A- 105 333 017
- CN-U- 207 648 106
- US-A1- 2012 141 270
- US-A1- 2012 211 307
- US-A1- 2013 068 253

## Description

The present invention concerns a wind turbine generator grease extraction device and an associated method.

In this application, the term "wind turbine generator" is used to refer to the electrical generator itself, as well as the associated drive train. The term "wind turbine" is instead used to refer to the whole wind turbine assembly, including the tower, blades, nacelle and the generator. Nevertheless, in the art, the terms "wind turbine generator" and "wind turbine" are sometimes used interchangeably depending on the context.

Wind turbines present unique set of issues in terms of maintenance and repair. In particular, they are typically located offshore or in otherwise remote locations, and the generator is housed in an elevated position within a nacelle on top of a tower making access difficult. As such, maintenance and repair operations are expensive and hazardous, and require specialist vehicles and equipment. At the same time, wind turbine generators are also uniquely prone to failure. That is, other electric generator applications are typically operated in a relatively steady state and within relatively controlled environmental conditions. This provides for some level of predictability in terms of operating wear and, in turn, allows servicing intervals to be scheduled to identify defects before they lead to catastrophic failure. In contrast, wind turbine generators are subjected to huge variations in load as wind speeds and directions change, as well as large variations in thermal stresses with changing weather conditions. As such, these variations often accelerate certain failure modes in ways that are difficult to predict, meaning that it is very challenging to pre-empt issues with regular servicing. Accordingly, not only is wind turbine generator servicing more expensive and challenging, but it is also much more difficult to predict when servicing is needed.

Particular problems arise in relation to interacting surfaces within the wind turbine generator, such as the bearing surfaces, gears and other parts of the drivetrain. In order to provide lubrication and reduce wear, it is necessary to feed grease to these parts. However, over time, the grease will pick up contaminants and wear debris, and this 'used' grease will therefore need to be removed from circulation.

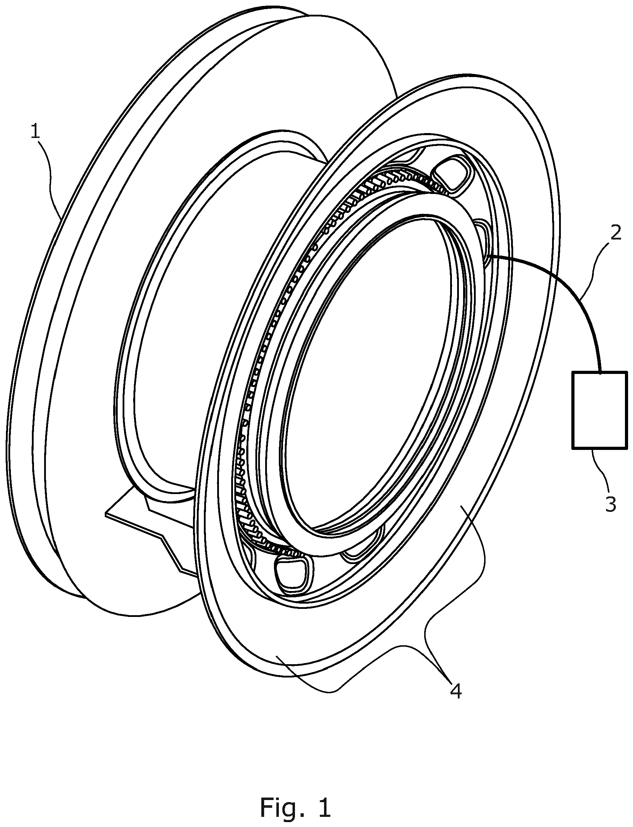

In this connection, Figure 1 shows a schematic illustration of a conventional grease extraction device connected to a bearing part 1 of a wind turbine generator. In this arrangement, a grease collection reservoir 3 is connected to the lubricated mechanical parts by a feed pipe 2. The grease collection reservoir 3 will typically be located at the base of the machine's housing and the feed pipe 3 will connect into an elevated region of the mechanical parts to allow the grease to be gravity fed down from this extraction location into the collection reservoir 3. However, there are shortcomings with this known arrangement. Most notably, an issue arises where some of the used grease will not be collected by the inlet of the feed pipe 3 at the extraction location, but instead collect in accumulation region 4 at the base of the machine. This may happen, for example, because of leakages between parts or if the feed pipe 2 or reservoir 3 overflows. As this collected grease accumulates over time, it eventually requires manual extraction by a cleaning crew. This becomes a hugely expensive and difficult task as the mechanical parts of the generator and drivetrain housing need to be brought offline, and then opened to allow physical access to their interior. Furthermore, if this isn't done sufficiently quickly, grease exposure and subsequent leakages can cause damage to other parts of the generator. For example, if grease were to leak into the stator, it could cause clogging of the stator slots, which in turn may lead to main component failure. This would then necessitate substantial, and consequently expensive, repairs.

The above shortcomings are also not straightforward to solve. For example, the conventional extraction devices are unable to feed grease from the accumulation region 4 at the base of the mechanism because gravity necessitates the reservoir 3 being lower than the inlet of the feed pipe 2. Furthermore, the high viscosity of the grease and its slow intermittent accumulation over long periods of time mean that conventional pump systems are also unsuitable. Some other proposed solutions include the provision of several smaller separate reservoirs integrated into the generator itself for collecting grease at different locations. However, although these arrangements may allow for better grease capture, the periodic emptying of the several smaller reservoirs would be time consuming, and such solutions require expensive adaptions to the generator itself.

US 2012/0141270 A1 discloses a drivetrain for a wind turbine and a method for lubricating a bearing in a drivetrain of a wind turbine. US 2012/0211307 A1 discloses a lubrication system for a gear system for a wind turbine. US 2013/0068253 A1 discloses system and method for purging a bearing and bearing housing. CN 207 648 106 U discloses a wind turbine generator gear box lubricating oil automatic replacement device. The present invention therefore seeks to address the above issues.

According to a first aspect of the present invention, there is provided a grease extraction device for extracting leaked grease from a leaked grease accumulation region at a base of a wind turbine generator housing, comprising: an intake conduit having an inlet for location at the leaked grease accumulation region; a collection chamber connected to the intake conduit for collecting leaked grease drawn through the intake conduit; and a vacuum pump for generating a negative pressure in the intake conduit for drawing in leaked grease through the inlet to the collection chamber.

In this way, a vacuum pump may be used to draw air from the collection chamber in order to form a partial vacuum that in turn generates a negative pressure in the intake conduit for drawing in grease. That is, the pressure within the intake conduit is lowered relative to the surrounding atmospheric pressure. This creates a suction effect at the inlet, which conveys grease through the intake conduit to the collection chamber in order to equalise the reduced pressure created by the vacuum pump. As a high propellant force is achieved, the grease can be effectively extracted from any extraction location, without the need for this location to be elevated relative to the collection chamber. Furthermore, the high propellant force also allows extraction to be achieved over relatively collection chamber. Furthermore, the high propellant force also allows extraction to be achieved over relatively longer distances, allowing the collection chamber and vacuum pump to be located outside of the wind turbine generator's housing. This allows larger collection chambers to be used, and hence minimises the emptying frequency that may be required. Furthermore, the suction effect allows smaller diameter conduits to be used. For example, in embodiments where a pipe is used as the intake conduit, a smaller diameter pipe may connect into the wind turbine generator's housing compared to a conventional gravity driven arrangement. This allows for easier implementation of the system without disruption to the serviced mechanism. Advantageously, the arrangement also allows for an inexpensive air pump to be used, rather than directly pumping the viscous grease itself. As such, implementations may therefore be both cost-effective and flexible. Furthermore, directly pumping grease would require a much higher-pressure pump, which in turn would risk ruptures in the associated pump conduits, which presents a safety risk, as well as necessitating ongoing lubrication within the pump mechanism itself.

In embodiments, the collection chamber comprises a vacuum port and an intake port, wherein the vacuum pump is connected to the vacuum port for generating a negative pressure in the collection chamber, and wherein the intake conduit is connected to the intake port. In this way, the collection chamber may be provided as a simple sealed volume with independent ports for facilitating easy connection to the intake conduit and the vacuum pump.

In embodiments, the vacuum port is located at an upper region of the collection chamber for drawing in air from the collection chamber. In this way, air may be drawn from the upper region of the collection chamber's interior, whilst the port inlet is separated from the collected grease at the bottom of the chamber to mitigate the risk of this being drawn through into the vacuum pump.

In embodiments, the intake port comprises a feed tube extending into the interior of the collection chamber to a location below an inlet of the vacuum port. In this way, the grease may be fed into the collection chamber whilst mitigating the chance of grease being directed onto the chamber walls. Furthermore, the arrangement also acts as a stop mechanism whereby, once the grease level reaches the bottom of the feed tube, further grease extraction is prevented because the partial vacuum in the remainder of the chamber is no longer able to generate a sufficient negative pressure within the intake conduit.

In embodiments, the device further comprises a one-way valve connected between the collection chamber and the vacuum pump for maintaining a negative pressure generated by the vacuum pump in the collection chamber. In this way, the one-way valve may act to prevent air from being drawn back into the collection chamber through the vacuum pump. As such, a negative pressure in the collection chamber can only be equalised substantially by drawing fluid through the intake conduit. That is, the one-way valve acts to hold the negative pressure generated by the vacuum pump, thereby allowing grease to be sucked into the collection chamber even after the vacuum pump is deactivated. Consequently, the vacuum pump does not need to be driven continuously to maintain grease extraction.

In embodiments, the device further comprises a release valve for releasing a negative pressure within the collection chamber. This may allow the grease extraction to be rapidly stopped by equalising the pressure within the chamber, and also allows the chamber to be emptied.

In embodiments, the device further comprises a controller for controlling the vacuum pump, wherein the controller is configured to periodically initiate an extraction operation in which the vacuum pump generates a negative pressure for extracting leaked grease from the leaked grease accumulation region. In this way, the vacuum pump may be operated intermittently, for example at predetermined intervals, to minimise wear on its components and increase its operating lifespan.

In embodiments, the extraction operation comprises the vacuum pump being activated cyclically. In this way, the vacuum pump may be cycled on and off for minimising wear on its components and increases its operating lifespan.

In embodiments, each cycle comprises the vacuum pump being activated until a peak negative pressure is generated and then deactivated for a deactivation period. This may thereby account for the relatively slow fluid flows associated with the highly viscous grease, by generating a peak negative pressure during an activated period and allowing the pump to be deactivated while grease is slowly drawn into the chamber to equalise this negative pressure.

In embodiments, the deactivation period is configured such that the negative pressure in the intake conduit does not drop below a threshold pressure required for drawing leaked grease through the inlet. In this way, the negative pressure may be maintained sufficiently high to draw grease through the intake conduit throughout the extraction operation period, but without the vacuum pump needing to be operated continuously. In embodiments, the deactivation period may be a predetermined time period selected based on the specifications of the system, such as the viscosity of the grease, the length and diameter of the intake conduit, and the peak negative pressure generated within the collection chamber.

In embodiments, the controller initiates an extraction operation in periods of every 1-365 days. In this way, the frequency of the extraction operations may be set depending on the needs of the application to thereby minimise operating time, whilst ensuring sufficient volumes of grease are removed. For example, an extraction operation every seven days may be sufficient to avoid grease build up, whilst maximising the operating lifespan of the pump.

In embodiments, each extraction operation comprises between 3-10 cycles. In this way the number of cycles may be set to ensure sufficient volumes of grease are removed, depending on the frequency of the extraction operations.

In embodiments, each cycle has a duration of 10-20 minutes. In this way, the suction effect may be maintained for an extended duration. For instance, in embodiments, a 15-minute cycle may be implemented by the controller with the vacuum pump being activated for 3 minutes to reach a peak negative pressure, followed by a 12-minute deactivation period.

In embodiments, the leaked grease accumulation region is a housing region below a bearing within the wind turbine generator, wherein the device further comprises a mounting for mounting the inlet at the housing region below the bearing. In this way, a wind turbine grease extraction device is provided which can extract used grease from the wind turbine generator. This thereby allows for easy and effective grease extraction, minimising the need for maintenance operations to clear grease spillages and hence providing significant cost savings in the field of wind turbines.

In embodiments, the intake conduit is a tube having a bore diameter of 5mm to 60mm. More preferably the bore diameter is 15 to 40 mm, and most preferred the bore diameter is 30-35 mm. In this way, a compact and flexible conduit may be used to draw grease from the machine. This thereby allows the device to be implemented in a large variety of applications.

According to a second aspect, there is provided a method of grease extraction for extracting leaked grease from a leaked grease accumulation region at a base of a wind turbine generator housing, comprising: locating an inlet of an intake conduit at the leaked grease accumulation region; generating a negative pressure in the intake conduit using a vacuum pump for drawing in leaked grease through the inlet; and collecting leaked grease drawn through the intake conduit in a collection chamber connected to the intake conduit.

In embodiments, the step of generating a negative pressure in the intake conduit comprises controlling the vacuum pump using a controller to periodically initiate an extraction operation in which the vacuum pump generates the negative pressure.

Illustrative embodiments of the present invention will now be described with reference to the accompanying drawings in which:
Figure 1 shows a schematic illustration of a conventional grease extraction device connected to a bearing part of a wind turbine generator;
Figure 2 shows a schematic illustration of a grease extraction device according to an illustrative embodiment connected to a bearing part of a wind turbine generator; and
Figure 3 shows a graph plotting negative pressure over time for an extraction operation implemented by the illustrative embodiment.

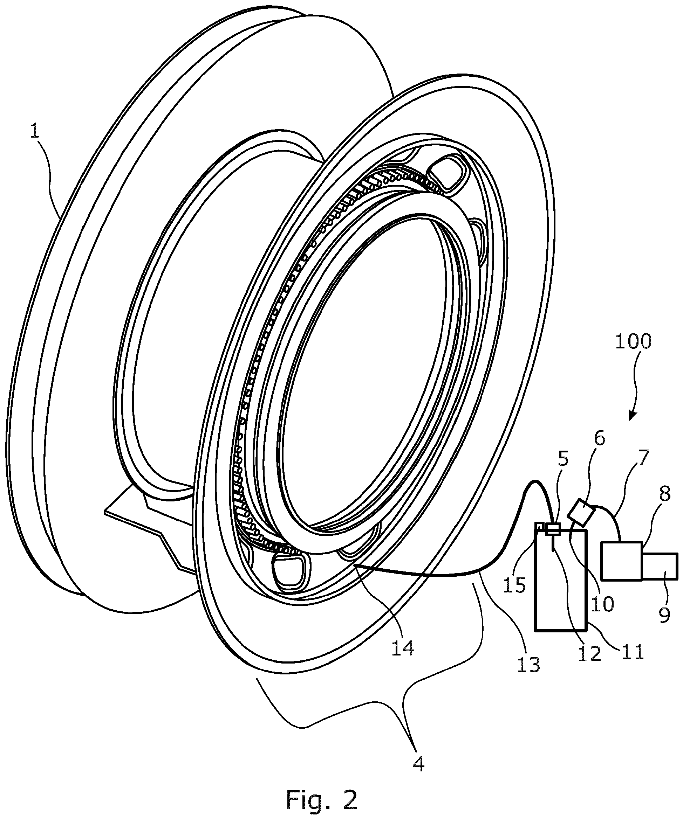

A grease extraction device 100 according to an illustrative embodiment is shown in Figure 2. The grease extraction device is fitted into a bearing part 1 of a wind turbine generator. Other parts of the wind turbine and wind turbine generator are not shown for simplicity.

The device 100 comprises an intake tube 13, with an inlet end 14 being mounted at an accumulation region 4 of the bearing part 1 and the other end being connected into an intake port 5 of a collection chamber 11. The intake port 5 connects into feed pipe 12 which extends down into the top of the collection chamber 11 for feeding grease into the chamber 11. The collection chamber 11 is a sealed container of a fixed volume such that the pressure within the chamber 11 can be varied relative to atmospheric pressure. The collection chamber 11 has a detachable lid for allowing the container to be emptied.

A vacuum pump 8 is further provided for drawing air from the collection chamber 11 through the vacuum tube 7. The vacuum pump 8 is a dry air pump which expels air out, thereby drawing an airflow through the vacuum tube 7. The vacuum tube 7 attaches to the collection chamber 11 at vacuum port 10 at the top of the chamber 11. As such, the inlet of vacuum port 10 is above the inlet of the feed pipe 12. The vacuum pump 8 is controlled by controller 9 which incorporates a timer for periodically activating the vacuum pump to evacuate air from the chamber 11.

A one-way valve 6 is provided in the vacuum tube 7 between the vacuum pump 8 and the collection chamber 11. The one-way valve 6 is orientated to allow air to be drawn out of the chamber 11 by the vacuum pump 8. At the same time, the one-way valve 6 prevents air from being drawn through the vacuum tube 7 back into the chamber. It will be understood that although the one-way valve 6 has been shown separately, it may be integrated into the vacuum port 10 or the vacuum pump 8.

In this embodiment, a release valve 15 is incorporated into the collection chamber 11 for releasing the partial vacuum by allowing air to flow into the collection chamber 11. This allows a partial vacuum within the chamber 11 to be quickly equalized if required. The release valve 15 is further provided with a filter covering its inlet to prevent physical injury in the event that an appendage was to occlude the inlet.

The intake tube 13 in this embodiment is formed of a 5 meter tube with a 22mm bore that extends through the machine housing that encloses the bearing 1. As such, the collection chamber 11, vacuum pump 8 and controller 9 may be provided externally to the wind turbine generator, thereby providing for simplified installation.

During an extraction operation, the controller 9 activates the vacuum pump 8, which draws air through the vacuum tube 7 and the one-way valve 6 to reduce the pressure within the collection chamber 11. This establishes a negative pressure in which the pressure within the collection chamber 11 is lower than atmospheric pressure. As such, this negative pressure acts to draw fluid through the intake tube 13. As the inlet 14 of the intake tube 13 is located in the accumulation region 4 of the machine where used grease collects, this grease is thereby drawn though the inlet 14 and the intake tube 13 into the collection chamber 11, where it collects. As such, the used grease is extracted from the bearing 1.

In use, the grease extraction device 100 is operated periodically to implement extraction operations at predetermined time intervals. In this embodiment, the controller 9 is configured to implement weekly extraction operations, although other time periods may be used depending on, for example, the rate of grease collection at the accumulation region 4. In other embodiments, a sensor may be provided in the grease collection region 4 for triggering the controller 9 to start an extraction operation by activating the pump 8.

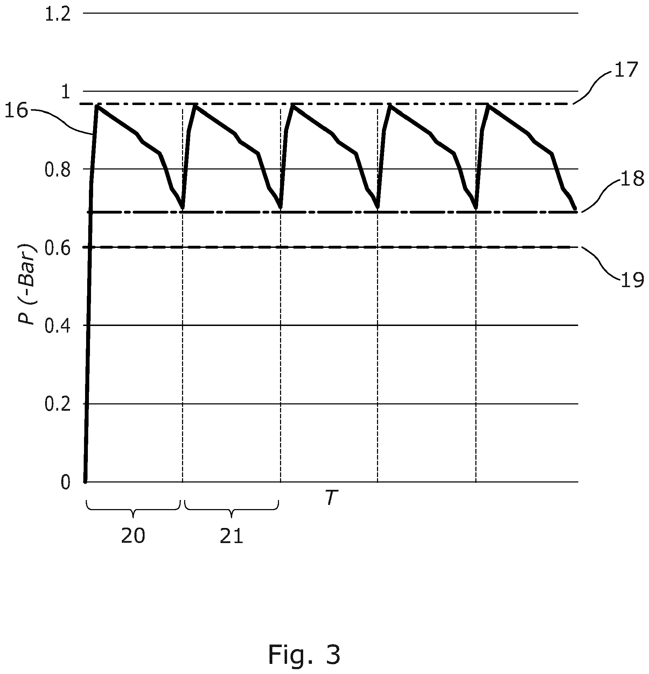

Figure 3 shows a graph plotting negative pressure 16 over time for a single extraction operation. At the start of the extraction operation sequence, the controller 9 activates the vacuum pump 8 to generate a negative pressure in the collection chamber 11.

There is a minimum threshold pressure 18 at which the propellant suction force generated by the partial vacuum within the collection chamber 11 is sufficiently high to draw in grease through the intake tube 13. In this example shown in Figure 3, the threshold pressure 18 is around -0.6 bar or -60 kPa, based on the intake tube 13 being 5 meters with 22mm diameter bore, and the grease being Monbilith SHC007 (RTM). However, it will be understood that the level of the minimum threshold pressure will vary depending on several factors including the viscosity of the grease being extracted, the quantity of contaminants, as well as the diameter and length of the intake tube 13.

As the negative pressure in the collection chamber 11 increases above the minimum threshold pressure 18, grease is drawn through the intake tube 13 into the collection chamber 11. In this embodiment, the vacuum pump 8 is capable of generating a peak negative pressure 17 of just under 1 bar, at around -0.95 bar or -95 kPa, and it takes around 2 minutes for the chamber 11 to reach this negative pressure naturally depending on pump 9 and collection chamber size.

Once the peak negative pressure 17 is reached, continued activation of the vacuum pump 8 will not further increase the negative pressure. After a fixed time period, in this case two minutes, the controller 9 deactivates the vacuum pump 8. Nevertheless, as the one-way valve 6 prevents the influx of air through the vacuum port 10, the negative pressure within the chamber 11 can only be substantially equalized by the influx of grease through the intake tube 13. Accordingly, as shown in Figure 3, the negative pressure is maintained relatively high by the one-way valve 6 and drops gradually due to the relatively slow flow rate of the grease into the chamber 11.

The controller 9 keeps the vacuum pump off for a predetermined duration, in this case for 15 minutes. During this deactivated period, the negative pressure 16 slowly declines until a lower negative pressure level 18. The duration of the deactivation period is selected to ensure the lower negative pressure level 18 remains above the minimum threshold pressure 19, and thereby movement of the grease into the collection chamber 11 is maintained. This thereby completes a first vacuum cycle 20.

After the first vacuum cycle 20, the process may be repeated in a second vacuum cycle 21 in which the vacuum pump 8 is run for a 1 minute activation period in which the peak negative pressure 17 is reached, followed by a 15 minute deactivation period. This is then repeated for further cycles, as required.

In this example, a sequence of five vacuum cycles are used. That is, there is a 2 minute activation period, followed by a 15 minute deactivation period, followed by four cycles of 1 minute activation periods with 15 minute deactivation periods. Therefore, each extraction operation sustains the negative pressure above the minimum threshold pressure 19 for a period of substantially 85 minutes, which during testing of the illustrative example was able to extract around 2000g of grease. Nevertheless, the vacuum pump 8 itself is only operated for a total of 6 minutes. Over a year, with weekly scheduled extraction operations, a total of 104kg of grease could therefore be removed, with a total vacuum pump run-time of 312 minutes.

The collection chamber 11 may be periodically emptied of grease during maintenance operations. For example, during inspection visits, a technician may trigger the release to equalize the pressure in the chamber 11, and then decant the contents for removal from the wind turbine. Alternatively, a plastic bag is used as a liner in the collection chamber 11 or the whole collection chamber 11 may be switched with a new collection chamber 11.

Importantly, with the above device, a relatively inexpensive vacuum pump 8 may be used because of the shortened operating time and the relatively low negative pressures required for effective operation. As such, there is no need to employ more expensive vacuum pumps that would enable continuous operation. Furthermore, the relatively low vacuum is considerably safer than pressurized systems. Accordingly, a safe, cost-effective, and flexible, grease extraction device may be provided. This may thereby avoid the need to schedule time-consuming and expensive manual grease cleaning servicing. At the same time, the risk of grease accumulation damage is mitigated.

In addition, the extraction device may be used both in conjunction with existing grease extraction devices, such as gravity systems, or as a replacement to those conventional devices. As such, a simplified grease extraction solution may be provided.

It will be understood that the embodiments illustrated above show applications of the invention only for the purposes of illustration. In practice the invention may be applied to many different configurations, the detailed embodiments being straightforward for those skilled in the art to implement.

For example, although in the above illustrative embodiment, a simple timer controller has been described, it will be understood that more advanced control and monitoring functionality may be incorporated. For example, the controller may provide feedback to the SCADA system or otherwise provide a remote alert of the system's status.

It will also be understood that the location of the accumulation region may vary from machine to machine and, in some scenarios, a machine may have more than one grease accumulation region. In such situations, more than one extraction device may be used or multiple tubes 13 may be connected to the collection chamber 11. Here, the tubes 13 may be distributed throughout the collection chamber 11 to avoid build-up of thick grease or grease separating into soap and oil.

## Claims

1. A grease extraction device for extracting leaked grease from a leaked grease accumulation region (4) at a base of a wind turbine generator housing, comprising:
an intake conduit (13) having an inlet (14) for location at the leaked grease accumulation region (4);
a collection chamber (11) connected to the intake conduit (13) for collecting leaked grease drawn through the intake conduit (13); and
a vacuum pump (8) for generating a negative pressure in the intake conduit (13) for drawing in leaked grease through the inlet (14) to the collection chamber (11) .

2. A grease extraction device according to claim 1, wherein the collection chamber (11) comprises a vacuum port (10) and an intake port (5), wherein the vacuum pump (8) is connected to the vacuum port (10) for generating a negative pressure in the collection chamber (11), and wherein the intake conduit (13) is connected to the intake port (5).

3. A grease extraction device according to claim 2, wherein the vacuum port (10) is located at an upper region of the collection chamber (11) for drawing in air from the collection chamber (11).

4. A grease extraction device according to claim 2 or 3, wherein the intake port comprises a feed tube (12) extending into the interior of the collection chamber (11) to a location below an inlet of the vacuum port (10).

5. A grease extraction device according to any preceding claim, further comprising a one-way valve (6) connected between the collection chamber (11) and the vacuum pump (8) for maintaining a negative pressure generated by the vacuum pump (8) in the collection chamber (11).

6. A grease extraction device according to any preceding claim, further comprising a controller (9) for controlling the vacuum pump (8), wherein the controller (9) is configured to periodically initiate an extraction operation in which the vacuum pump (8) generates a negative pressure for extracting leaked grease from the leaked grease accumulation region (4).

7. A grease extraction device according to claim 6, wherein the extraction operation comprises the vacuum pump (8) being activated cyclically.

8. A grease extraction device according to claim 7, wherein each cycle comprises the vacuum pump (8) being activated until a peak negative pressure is generated and then deactivated for a deactivation period.

9. A grease extraction device according to claim 8, wherein the deactivation period is configured such that the negative pressure in the intake conduit (13) does not drop below a threshold pressure required for drawing leaked grease through the inlet (14).

10. A grease extraction device according to any one of claims 6-9, wherein the controller (9) initiates an extraction operation in periods of every 1-365 days.

11. A grease extraction device according to any one of claims 7-10, wherein each extraction operation comprises between 3-10 cycles.

12. A grease extraction device according to any one of claims 7-11, wherein each cycle has a duration of 10-20 minutes.

13. A grease extraction device according to any preceding claim, wherein the leaked grease accumulation region (4) is a housing region below a bearing (1) within the wind turbine generator, wherein the device further comprises a mounting for mounting the inlet (14) at the housing region below the bearing (1).

14. A method of grease extraction for extracting leaked grease from a leaked grease accumulation region (4) at a base of a wind turbine generator housing, comprising:
locating an inlet (14) of an intake conduit (13) at the leaked grease accumulation region (4);
generating a negative pressure in the intake conduit (13) using a vacuum pump (8) for drawing in leaked grease through the inlet (14); and
collecting leaked grease drawn through the intake conduit (13) in a collection chamber (11) connected to the intake conduit (13).

15. A method according to claim 14, wherein the step of generating a negative pressure in the intake conduit (13) comprises controlling the vacuum pump (8)using a controller (9) to periodically initiate an extraction operation in which the vacuum pump (8) generates the negative pressure.

## Patentansprüche

1. Schmiermittel-Extraktionsvorrichtung für das Beseitigen von ausgetretenem Schmiermittel in einem Akkumulationsbereich des ausgetretenen Schmiermittels (4) an einer Gehäuseunterseite einer Windenergieanlage, umfassend:
Eine Ansaugleitung (13) mit einem Einlass (14) für die Positionierung im Akkumulationsbereich des ausgetretenen Schmiermittels (4);
einen Auffangbehälter (11), der mit der Ansaugleitung (13) verbunden ist, um das ausgetretene Schmiermittel durch die Ansaugleitung (13) aufzufangen; und
eine Vakuumpumpe (8) für das Erzeugen eines negativen Drucks in der Ansaugleitung (13), um das ausgetretene Schmiermittel durch den Einlass in den Auffangbehälter (11) zu ziehen.

2. Schmiermittel-Extraktionsvorrichtung nach Anspruch 1, wobei der Auffangbehälter (11) einen Vakuumanschluss (10) und eine Ansaugöffnung (5) umfasst, wobei die Vakuumpumpe (8) mit dem Vakuumanschluss (10) verbunden ist, um einen negativen Druck im Auffangbehälter (11) zu erzeugen, und wobei die Ansaugleitung (13) mit der Ansaugöffnung (5) verbunden ist.

3. Schmiermittel-Extraktionsvorrichtung nach Anspruch 2, wobei der Vakuumanschluss (10) in einem oberen Bereich des Auffangbehälters (11) positioniert ist, um Luft aus dem Auffangbehälter (11) anzusaugen.

4. Schmiermittel-Extraktionsvorrichtung nach Anspruch 2 oder 3, wobei die Ansaugöffnung eine Zufuhrleitung (12) umfasst, die sich in den Innenbereich des Auffangbehälters (11) in eine Position unter einem Einlass des Vakuumanschlusses (10) erstreckt.

5. Schmiermittel-Extraktionsvorrichtung nach einem der vorhergehenden Ansprüche, ferner umfassend ein Einwegventil (6), das zwischen dem Auffangbehälter (11) und der Vakuumpumpe (8) angeschlossen ist, um einen negativen Druck aufrechtzuerhalten, der von der Vakuumpumpe (8) in dem Auffangbehälter (11) erzeugt wird.

6. Schmiermittel-Extraktionsvorrichtung nach einem der vorhergehenden Ansprüche, ferner umfassend eine Steuereinheit (9) für das Steuern der Vakuumpumpe (8), wobei die Steuereinheit (9) konfiguriert ist, regelmäßig einen Extraktionsvorgang zu beginnen, bei dem die Vakuumpumpe (8) einen negativen Druck erzeugt, um ausgetretenes Schmiermittel aus dem Akkumulationsbereich des ausgetretenen Schmiermittels (4) zu beseitigen.

7. Schmiermittel-Extraktionsvorrichtung nach Anspruch 6, wobei der Extraktionsvorgang das zyklische Aktivieren der Vakuumpumpe (8) umfasst.

8. Schmiermittel-Extraktionsvorrichtung nach Anspruch 7, wobei jeder Zyklus das Aktivieren der Vakuumpumpe (8) umfasst, bis ein negativer Spitzendruck erzeugt wird, und dann das Deaktivieren für einen Deaktivierungszeitraum.

9. Schmiermittel-Extraktionsvorrichtung nach Anspruch 8, wobei der Deaktivierungszeitraum so konfiguriert ist, dass der negative Druck in der Ansaugleitung (13) nicht unter einen Schwellendruck abfallen kann, der für das Ansaugen des ausgetretenen Schmiermittels durch den Einlass (14) erforderlich ist.

10. Schmiermittel-Extraktionsvorrichtung nach einem der Ansprüche 6 - 9, wobei die Steuereinheit (9) einen Extraktionsvorgang in Zeiträumen von jeweils 1 - 365 Tagen einleitet.

11. Schmiermittel-Extraktionsvorrichtung nach einem der Ansprüche 7 - 10, wobei jeder Extraktionsvorgang zwischen 3 - 10 Zyklen umfasst.

12. Schmiermittel-Extraktionsvorrichtung nach einem der Ansprüche 7 - 11, wobei jeder Zyklus eine Dauer von 10 - 20 Minuten hat.

13. Schmiermittel-Extraktionsvorrichtung nach einem der vorhergehenden Ansprüche, wobei der Akkumulationsbereich des ausgetretenen Schmiermittels (4) ein Gehäusebereich unter einem Lager (1) innerhalb der Windenergieanlage ist, wobei das Gerät ferner eine Befestigungsvorrichtung umfasst, um den Einlass (14) im Gehäusebereich unter dem Lager (1) zu befestigen.

14. Verfahren einer Schmiermittelextraktion für das Beseitigen von ausgetretenem Schmiermittel in einem Akkumulationsbereich des ausgetretenen Schmiermittels (4) an einer Gehäuseunterseite einer Windenergieanlage, umfassend:
Positionieren eines Einlasses (14) einer Ansaugleitung (13) in dem Akkumulationsbereich des ausgetretenen Schmiermittels (4);
Erzeugen eines negativen Drucks in der Ansaugleitung (13) mit einer Vakuumpumpe (8), um ausgetretenes Schmiermittel durch den Einlass (14) anzusaugen; und
Auffangen von ausgetretenem Schmiermittel, das durch die Ansaugleitung (13) in einen Auffangbehälter (11), der mit der Ansaugleitung (13) verbunden ist, angesaugt wird.

15. Verfahren nach Anspruch 14, wobei der Schritt der Erzeugung eines negativen Drucks in der Ansaugleitung (13) das Steuern der Vakuumpumpe (8) über eine Steuereinheit (9) umfasst, um regelmäßig einen Extraktionsvorgang zu beginnen, bei dem die Vakuumpumpe (8) den negativen Druck erzeugt.

## Revendications

1. Dispositif d'extraction de graisse servant à extraire une fuite de graisse d'une zone d'accumulation de la fuite de graisse (4) à la base d'un logement de générateur d'éolienne, comprenant :
un conduit d'admission (13) présentant une entrée (14) destinée à l'emplacement au niveau de la zone d'accumulation de la fuite de graisse (4) ;
une chambre de collecte (11) raccordée au conduit d'admission (13) destinée à collecter la fuite de graisse aspirée à travers le conduit d'admission (13) ; et
une pompe à vide (8) destinée à générer une pression négative dans le conduit d'admission (13) servant à aspirer la fuite de graisse à travers l'entrée de la chambre de collecte (11).

2. Dispositif d'extraction de graisse selon la revendication 1, dans lequel la chambre de collecte (11) comprend un orifice d'aspiration (10) et un orifice d'admission (5), dans lequel la pompe à vide (8) est raccordée à l'orifice d'aspiration (10) destiné à générer une pression négative dans la chambre de collecte (11) et dans lequel le conduit d'admission (13) est raccordé à l'orifice d'admission (5).

3. Dispositif d'extraction de graisse selon la revendication 2, dans lequel l'orifice d'aspiration (10) est situé au niveau d'une zone supérieure de la chambre de collecte (11) servant à aspirer l'air provenant de la chambre de collecte (11).

4. Dispositif d'extraction de graisse selon la revendication 2 ou 3, dans lequel l'orifice d'admission comprend un tube d'alimentation (12) s'étendant à l'intérieur de la chambre de collecte (11) jusqu'à un emplacement situé au-dessous d'une entrée de l'orifice d'aspiration (10).

5. Dispositif d'extraction de graisse selon l'une quelconque des revendications précédentes, comprenant en outre une vanne unidirectionnelle (6) raccordée entre la chambre de collecte (11) et la pompe à vide (8) servant à maintenir une pression négative générée par la pompe à vide (8) dans la chambre de collecte (11).

6. Dispositif d'extraction de graisse selon l'une quelconque des revendications précédentes, comprenant en outre un dispositif de commande (9) destiné à commander la pompe à vide (8), dans lequel le dispositif de commande (9) est conçu pour déclencher périodiquement une mise en oeuvre d'extraction dans laquelle la pompe à vide (8) génère une pression négative servant à extraire la fuite de graisse de la zone d'accumulation de la fuite de graisse (4).

7. Dispositif d'extraction de graisse selon la revendication 6, dans lequel la mise en oeuvre d'extraction comprend l'état d'activation cyclique de la pompe à vide (8).

8. Dispositif d'extraction de graisse selon la revendication 7, dans lequel chaque cycle comprend l'activation de la pompe à vide (8) jusqu'à ce qu'une pression négative maximale soit générée, puis sa désactivation pendant une période de désactivation.

9. Dispositif d'extraction de graisse selon la revendication 8, dans lequel la période de désactivation est conçue de sorte que la pression négative dans le conduit d'admission (13) ne chute pas en dessous d'une pression de seuil requise servant à aspirer la fuite de graisse à travers l'entrée (14).

10. Dispositif d'extraction de graisse selon l'une quelconque des revendications 6 à 9, dans lequel le dispositif de commande (9) déclenche une mise en oeuvre d'extraction par périodes chacune de 1 à 365 jours.

11. Dispositif d'extraction de graisse selon l'une quelconque des revendications 7 à 10, dans lequel chaque mise en oeuvre d'extraction comprend entre 3 et 10 cycles.

12. Dispositif d'extraction de graisse selon l'une quelconque des revendications 7 à 11, dans lequel chaque cycle a une durée de 10 à 20 minutes.

13. Dispositif d'extraction de graisse selon l'une quelconque des revendications précédentes, dans lequel la zone d'accumulation de la fuite de graisse (4) est une zone du logement en dessous d'un roulement (1) à l'intérieur de l'éolienne, dans lequel le dispositif comprend en outre un montage destiné à monter l'entrée (14) au niveau de la zone du logement en dessous du roulement (1).

14. Procédé d'extraction de graisse servant à extraire une fuite de graisse d'une zone d'accumulation de la fuite de graisse (4) à la base d'un logement de générateur d'éolienne, comprenant :
la localisation d'une entrée (14) d'un conduit d'admission (13) au niveau de la zone d'accumulation de la fuite de graisse (4) ;
la génération d'une pression négative dans le conduit d'admission (13) à l'aide d'une pompe à vide (8) servant à aspirer la fuite de graisse à travers l'entrée (14) ; et
la collecte de la fuite de graisse aspirée à travers le conduit d'admission (13) dans une chambre de collecte (11) raccordée au conduit d'admission (13).

15. Procédé selon la revendication 14, dans lequel l'étape de génération d'une pression négative dans le conduit d'admission (13) comprend la commande de la pompe à vide (8) à l'aide d'un dispositif de commande (9) pour déclencher périodiquement une mise en oeuvre d'extraction dans laquelle la pompe à vide (8) génère la pression négative.
